# EUROPEAN PATENT SPECIFICATION

(11) **EP 1 001 672 B1**
(45) Date of publication and mention of the grant of the patent: **27.08.2003**
(21) Application number: 97950518.7
(22) Date of filing: 24.12.1997
(51) Int. Cl.: A01J 5/017

(54) **A DEVICE AND METHOD FOR MILKING ANIMALS**
VORRICHTUNG UND VERFAHREN ZUM MELKEN VON TIEREN
PROCEDE ET DISPOSITIF PERMETTANT DE TRAIRE DES ANIMAUX

(30) Priority: 31.12.1996 NL 1004922
(43) Date of publication of application: 24.05.2000
(73) Proprietor: PROLION B.V., 2141 BS Vijfhuizen (NL)
(72) Inventor: OOSTERLING, Pieter, Adriaan, NL-2151 CP Nieuw-Vennep (NL)
(74) Representative: Hoorweg, Petrus Nicolaas
(86) International application number: PCT/NL97/00723
(87) International publication number: WO 98/028968

(56) References cited:
- EP-A- 0 300 582
- EP-A- 0 323 875
- DE-A- 4 113 700
- NL-A- 9 400 220

## Description

The invention concerns a device according to the preliminary part of claim 1. Such a device is known from EP 0323875.

In the known device the position of one of the teats is detected by the sensor system 15 with the sensors 16 whereafter the positioning means bring the teatcups one after the other under the respective teats and attach the teatcups around the teats. The disadvantage of the known device is that it is sometimes unclear in the controlsystem which of the front teats has been detected by the sensorsystem. Another disadvantage is that the detected teat can be brought outside the most sensitive part of the detectionfield when a teatcup fixed to the positioning means is brought under a teat.

The invention aims to remove these disadvantages and thereto the device is according the characterizing part of claim 1. By bringing the detectionfield in at least two positions perpendicular to the longitudinal direction of the animal the front teats will be irradiated from at least two directions so that additional position-information is generated and the position of both frontteats can be determined. Also by moving the detection field relative to the positioning means one of the frontteats can remain in the most sensitive part of the detectionfield when a teat cup fixed to the positioning means is positioned under a teat.

The invention also comprises a method in accordance with the preliminary part of claim 3. This method is known from the earlier mentioned document. The disadvan-tage of the known method is that it is not always clear from which frontteats the position is determined by the sensors. In accordance with the invention according to the characterizing part of claim 3 for determining the position of a frontteat the detectionfield is generated in at least two positions relative to the frontteats. By moving the detectionfield the sensors can generate additional position information, so that the position of a frontteat can be determined more accurately.

Also the invention comprises a method in accordance with the preliminary part of claim 4. This method is known from the earlier mentioned document. In the known method during attaching of the teatcups the movements of the cow are followed by means of the sensor system. This is done by following the movements of one of the frontteats, after this frontteat has been detected in the detectionfield. During the positioning of a teatcup fixed to the positioning means under a teat which is not in the detection field and followed by the sensor system the position of the teat that has been followed will change in regard to the positioning means and therefore also in regard to the detectionfield. This causes the teat to move outside the most sensitive part of the detectionfield which results in a deteriorated measuring signal, which is a disadvantage. In accordance with the invention according to the characterizing part, of claim 4, during the attachment the detectionfield is moved perpendicular to the longitudinal direction of the animal relative to the positioning means so that one of the two frontteats remains in the more sensitive part of the detectionfield. This prevents the earlier mentioned disadvantage.

The invention is hereafter illustrated with help of an embodiment with a drawing wherein
figure 1 shows a schematically topview of a milking parlour for cows,
figure 2 shows a detail in topview from the sensorsystem shown in figure 1 for the detecting of the position of a teat, and
figure 3 shows the sensorsystem of figure 2 in sideview.

In the various figures the similar parts have been provided with similar numbers.

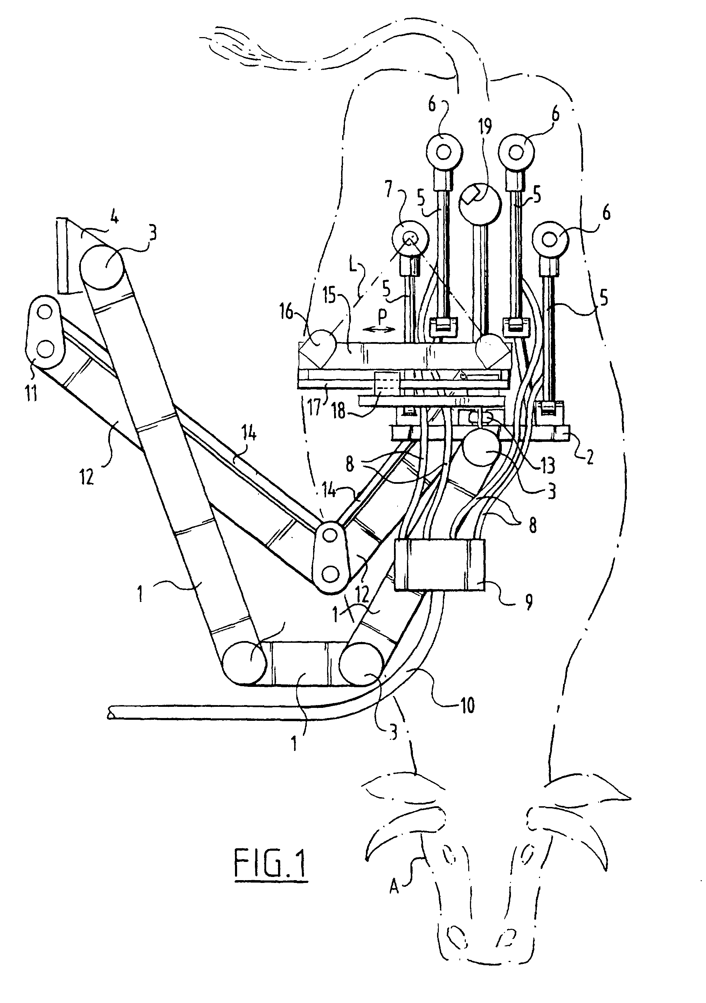

In figure 1 a topview of a milking parlour is shown wherein a to be milked animal A has been indicated schematically. The attachment of teatcups around the teats is executed in hereafter described way with a positioning and attachmentsystem under control of a controlsystem, such a system is known under the name milkrobot. The following of the position of the teats during attachment is thereby important, whereby the invention inter alia concerns the sensorsystem used.

Teatcups 6 and 7 are connected with a teatcup-arm 5 to a milkrack 2. This milkrack 2 is attached to the side of the milking parlour via hinges 3 and milkrack-arms 1 and a support 4. The milk flows from the teatcups 6 and 7 through a milkline 8 to a collector 9 and from there through a milkdrain 10 to a milktank which is not shown.

During the attachment of the teatcups 6 and 7 around the teats the milkrack 2 is moved by a milkrobot with robotarms 12. The milkrobot is fastened to the side of the milking parlour with a support 11 or can be connected to a movable support that makes it possible that the milkrobot is moved to a different milking parlour for connecting teatcups of a different milkrack to a different cow. For that reason the milkrobot is detachable connected to the milkrack 2 with a robotgripper 13. For ensuring that the milkrack 2 remains in the same direction during attaching of the teatcups a guiderod 14 is attached along the robotarms 12.

For following the position of a referenceteat the milkrobot is provided with sensors 16. When the milkrobot and the milkrack 2 are connected these sensors 16 when in a middle position are directed with a centreline 1 at the teatcup 7, wherein the referenceteat will be brought. The sensors 16 are placed on a sensorsupport 15 which is connected to a slideguide 17, which can move in slide 18 in a direction P perpendicular to the longitudinal direction of the milking parlour. The position of the slide 18 relative to the slideguide 17 is recorded in the controlsystem. As the sensors 16 have a in the controlsystem known position relative to the milkrack 2, the milkrack can follow the movements of the udder of the animal to be milked, for instance by following the movements of the referenceteat.

Through the now known position of the referenceteat the teatcup 7 can now be brought around the referenceteat by the milkrobot. With the teatposition sensor 19 the position of the other three teats relative to the referenceteat can be measured. In this way the positions of all teats are known in the controlsystem and the teatcups 6 can also be brought under their respective teats. In addition to measuring the relative teat-positions with the teatposition sensor 19 these can be determined also in other ways. It is for instance possible to calculate the relative positions of the teats from the known teatposition of a certain animal directly after milking and the time that has passed since the last milking.

Due to the relative teatposition of a certain animal usually being not identical to the relative positions of the teatcups on the milkrack, the reference teat will not be directly above teatcup 7 when the teatcups 6 are brought under their respective teats and will no longer be in the centre of the detectionfield of the sensors 16 that are in the middle position. As the deviation is known in the controlsystem the sensors 16 will be moved in this known distance in direction P until the referenceteat is well detectable again.

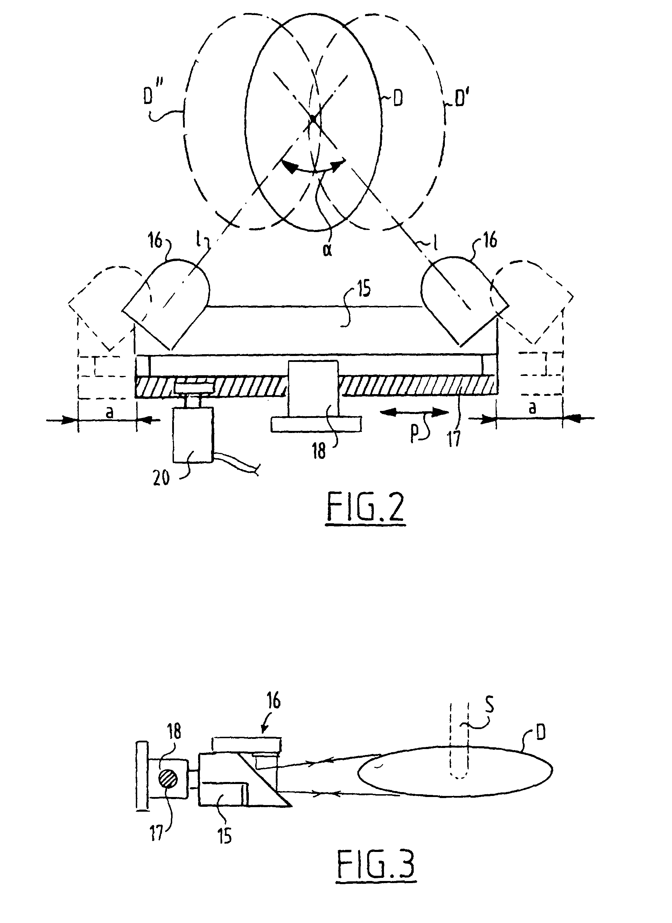

In figure 2 the sensorsystem is shown in topview. The sensors 16 are directionsensitive ultrasonic sensors with a centreline 1 of the ultrasonic beam, whereby each sensor 16 in the direction 1 can measure the distance to the object to be detected, in this case the referenceteat. Both sensors 16 together determine the detectionfield D wherein the presence and the position of the teat can be determined in the horizontal plane. In this case the detectionfield has been generated by the centrelines 1 of the detectionbeams making an angle α of approximately 80° so that it is more or less elliptical shaped. As this angle α goes to 90° the shape will be more or less circular and with smaller angles α the ellipse will get narrower.

By moving the sensorsupport 15 with the sensors 16 connected thereto in the direction P over a distance a in the one or the other direction the detectionfield moves to D' or D". During this movement the slideguide is moved by a slidedrive 20 which slidedrive 20 is provided with means for determining the position of the slide relative to the milkrack 2. The slidedrive can be made in various known ways, for instance with a steppermotor, a servomotor or for instance with a single or multi-stage aircylinder whereby the slide can be brought in two or three positions relative to the slideguide.

In the shown embodiment the angle α is relative large and the distance between the detectionfield and the sensors 16 is small. In this way the to be detected teat gives a stronger reflection and for that reason its position can be determined accurately. This is made possible as the teat does not leave the detectionfield anymore as the changing position of the teat when bringing the teatcups 6 under a teat is followed by movement of the sensor in the direction P. Due to the more or less elliptical form of the detectionfield D the movements in the longitudinal direction of the animal have less influence. It is known that the dimension of the detectionfield D is no absolute boundary, but that in the centre of the ellipse the detectionfield D has the highest sensitivity, and that this sensitivity diminishes as an object is further from the centre. The ellipse D indicates the points whereby the sensitivity is more or less equal and outside of which the sensitivity comes under a value that is deemed acceptable.

In figure 3 a sideview of figure 2 is shown, whereby the shown shape of the detectionfield D is as a field that is created with the ultrasonic sensor 16 with a transducent placed as shown in EP A 0323875 above a cone shaped mirror and whereby a substantially flat detectionfield is created. In the detectionfield D a to be detected teat S is shown.

The invention can also be used in other sensor-systems for detecting the position of a teat and which have a limited detectionfield so as for instance position-determination systems which are based on the reflection of light.

In addition to the herefore described use during attachment of teatcups around teats the movable detectionfield D of the sensors 16 is also used in another way. When the udder of the cow is approached from the front and the sensors 16 approach the teats, it is possible that there is no success in bringing the desired teat directly in the centre of the detectionfield D. It may happen for instance that the two frontteats of the udder are both irradiated by the sensors 16 and give reflections. It is then for the controlsystem of the sensorsystem not possible or very difficult to determine the position of the teats, as the received sensor information is contradictory. By moving the sensors 16 for instance in the direction P to the left and to irradiate the teat with the sensors 16 from the new position new reflections will be received, whereby it will then be possible that reflections of only one teat are received. After that the sensors 16 can be moved to the right whereby further additional information can be become available. By placing the sensors 16 on a sensorsupport 15 that is movable in the direction P the movements of the sensor 16 can be executed quickly as this sensorsupport 15 with sensors 16 has a far smaller mass that remaining part of the construction that moves to the udder. As a result of this quick movement the cow has often moved very little and the combination of the different viewpoints results in good position information. Due to this small mass the teats can be irradiated quickly with the sensors 16 on several positions breadthwise of the parlour, so that with the help of the detectionfield D the desired teat can be found and can be followed further during the attachment of the teatcups. It maybe possible to use this method of working also with sensors that are fixed to the positioning means. The movements of the sensors will then take more time, so that the accuracy is reduced. The construction though is more simple.

In addition to an application as described with the above mentioned embodiment the invention can also be used in milksystems whereby not four but two teatcups are attached at a time, or whereby one teatcup at a time is attached to a teat. Also in that case the quick movement breadthwise of the detectionfield D is used for detecting quickly the desired frontteat. Thereby the sensor can move quickly breadthwise which saves time and the robot can remain moving slowly. This has the advantage that the robot under the animal to be milked makes quiet movements which reduces the irritation of the animal.

In another embodiment the possibility to use two detectionfields is used for detecting the position of the hindteats as well. As the udder is irradiated from two different directions at least in one direction a hindteat will not be in the shadow of the frontteats. In this way with a single sensorsystem that can irradiate the udder from two positions the position of all four teats can be determined.

## Claims

1. Apparatus for milking an animal comprising a milking device with teatcups (6,7), positioning means (11-13) for approaching the frontside of the udder of the animal with a teatcup, positioning a teatcup under a teat and attaching the teatcup around the teat, control means for controlling inter alia the milking apparatus and the positioning means, a sensorsystem for detecting the position of a teat with at least one sensor (16) and a detectionfield (D) generated by the sensors which is substantially in a horizontal plane behind the sensors, whereby the sensors are coupled with the positioning means and whereby the sensorsystem feeds the control means with position information of the teats detected in said detection field **characterised in that** the sensorsystem comprises sensors (16) which are movable relative to the positioning means perpendicular to the longitudinal direction of the animal for generating a detectionfield (D) in at least two positions.

2. Device in accordance with claim 1 **characterised in that** the sensors (16) are connected to the positioning means (11-13) with a longitudinal guide (17) provided with a drive and with means (20) for determining the positions of the sensors relative to the positioning means.

3. Method for milking animals by moving teat cups (6,7) with positioning means (11-13) from the front to the udder of the animal to be milked, positioning them under a teat of the udder and attaching them to the teat whereafter milking is started, whereby during attaching the positioning means are controlled by a control system and whereby the control system is provided with information concerning the position of the teats by a sensor system coupled to the positioning means with a detection field (D) generated by at least one sensor (16) in a substantially horizontal plane behind the sensors and which can determine the position of at least one of the two front teats **characterised in that** the detection field is generated in at least two positions by moving the sensors perpendicular to the longitudinal direction of the animal relative to the front teats for determining the position of a front teat.

4. Method for milking animals by moving teat cups (6,7) with positioning means (11-13) from the front of the animal to be milked to the udder, positioning them under a teat of the udder and attaching them to the teat whereafter milking is started, whereby during the attaching the positioning means are controlled by a control system and whereby the control system is provided with information concerning the position of the teats by a sensor system coupled to the positioning means with a detection field (D) generated by at least one sensor (16) in a substantially horizontal plane behind the sensors and which can determine the position of at least one of the two front teats and whereby during attaching the teat cup has a fixed position relative to the positioning means **characterised in that** during attaching the detection field (D) is moved by moving the sensors perpendicular to the longitudinal direction of the animal relative to the positioning means for keeping one of the two front teats in the more sensitive part of the detection field.

## Patentansprüche

1. Vorrichtung zum Melken eines Tiers, umfassend eine Melkvorrichtung mit Saugglocken (6, 7), einer Positioniereinrichtung (11-13) zum Annähern einer Saugglocke an die Vorderseite des Euters des Tieres, zum Positionieren einer Saugglocke unter einer Zitze und zum Befestigen der Saugglocke um die Zitze herum, einer Steuerungseinrichtung zum Steuern von unter anderem der Melkvorrichtung und der Positioniereinrichtung, ein Sensorsystem zum Detektieren der Position einer Zitze mit wenigstens einem Sensor (16) und einem durch die Sensoren erzeugten Detektionsfeld (D), welches sich im wesentlichen in einer horizontalen Ebene hinter den Sensoren befindet, wobei die Sensoren mit der Positioniereinrichtung verbunden sind und wobei das Sensorsystem die Steuerungseinrichtung mit der Positionsinformation der in dem Detektionsfeld detektierten Zitzen versorgt, **dadurch gekennzeichnet, daß** das Sensorsystem Sensoren (16) umfaßt, die relativ zur Positioniereinrichtung senkrecht gegenüber der Längsrichtung des Tieres bewegbar sind, zum Erzeugen eines Detektionsfeldes (D) bei wenigstens zwei Positionen.

2. Vorrichtung gemäß Anspruch 1, **dadurch gekennzeichnet, daß** die Sensoren (16) mit der Positioniereinrichtung (11-13) mit einer Längsführung (17) verbunden sind, die mit einem Antrieb und mit einer Einrichtung (20) zum Bestimmen der Positionen der Sensoren relativ zur Positioniereinrichtung ausgestattet ist.

3. Verfahren zum Melken von Tieren, indem Saugglocken (6, 7) mit einer Positioniereinrichtung (11-13) von vorne in Richtung Euter des zu melkenden Tieres bewegt werden, diese unter einer Zitze des Euters positioniert werden und diese an die Zitze befestigt werden, wonach das Melken begonnen wird, wobei während der Befestigung die Positioniereinrichtung durch ein Steuerungssystem gesteuert wird, und wobei das Steuerungssystem mit Information betreffend die Position der Zitzen versorgt wird durch ein Sensorsystem, welches mit der Positioniereinrichtung durch ein Detektionsfeld (D) gekoppelt ist, welches durch wenigstens einen Sensor (16) in einer im wesentlichen horizontalen Ebene hinter den Sensoren erzeugt wird und welches die Position von wenigstens einer der beiden Vorderzitzen bestimmen kann, **dadurch gekennzeichnet, daß** das Detektionsfeld bei wenigstens zwei Positionen erzeugt wird, indem die Sensoren senkrecht zur Längsrichtung des Tieres in Bezug auf die Vorderzitzen bewegt werden, zum Bestimmen der Position einer Vorderzitze.

4. Verfahren zum Melken von Tieren, indem Saugglocken (6, 7) mit einer Positioniereinrichtung (11-13) von vorne des zu melkenden Tieres in Richtung Euter bewegt werden, diese unter einer Zitze des Euters positioniert werden und diese an der Zitze befestigt werden, wonach das Melken begonnen wird, wobei während der Befestigung die Positioniereinrichtung durch ein Steuerungssystem gesteuert wird, und wobei das Steuerungssystem mit Information betreffend die Position der Zitzen versorgt wird durch ein Sensorsystem, welches mit der Positioniereinrichtung über ein Detektionsfeld (D) gekoppelt ist, welches durch mindestens einen Sensor (16) in einer im wesentlichen horizontalen Ebene hinter den Sensoren erzeugt wird und welches die Position von wenigstens einer der beiden Vorderzitzen bestimmen kann, und wobei während der Befestigung die Saugglocke eine feste Position in Bezug auf die Positioniereinrichtung einnimmt, **dadurch gekennzeichnet, daß** während der Befestigung das Detektionsfeld (D) bewegt wird durch Bewegen der Sensoren senkrecht zur Längsrichtung des Tieres in Bezug auf die Positioniereinrichtung, um eine der beiden Vorderzitzen im empfindlicheren Teil des Detektionsfeldes zu halten.

## Revendications

1. Appareil pour la traite d'un animal comprenant un dispositif de traite avec des gobelets trayeurs (6, 7), un moyen de positionnement (11 à 13) pour approcher du côté avant du pis de l'animal avec un gobelet trayeur, positionnant un gobelet trayeur sous un trayon et attachant le gobelet trayeur autour du trayon, un moyen de commande pour commander entre autres l'appareil de traite et le moyen de positionnement, un système de capteur pour détecter la position d'un trayon avec au moins un capteur (16) et un champ de détection (D) produit par les capteurs qui est sensiblement dans un plan horizontal derrière les capteurs, de sorte que les capteurs sont reliés au moyen de positionnement et de sorte que le système de capteur alimente le moyen de commande avec des informations de position des trayons détectées dans ledit champ de détection, **caractérisé en ce que** le système de capteur comprend des capteurs (16) qui sont mobiles par rapport au moyen de positionnement perpendiculairement à la direction longitudinale de l'animal pour produire un champ de détection (D) dans au moins deux positions.

2. Appareil selon la revendication 1, **caractérisé en ce que** les capteurs (16) sont reliés au moyen de positionnement (11 à 13) par un guide longitudinal (17) muni d'un entraînement et d'un moyen (20) pour déterminer les positions des capteurs par rapport au moyen de positionnement.

3. Procédé pour la traite d'animaux en déplaçant des gobelets trayeurs (6, 7) avec un moyen de positionnement (11 à 13) à partir de l'avant vers le pis de l'animal à traire, les positionnant sous un trayon du pis et les attachant au trayon, après quoi la traite est démarrée, de sorte que pendant l'attachement, le moyen de positionnement est commandé par un système de commande, et de sorte que le système de commande est muni d'informations concernant la position des trayons par un système de capteur relié au moyen de positionnement avec un champ de détection (D) produit par au moins un capteur (16) dans un plan sensiblement horizontal derrière les capteurs et qui peut déterminer la position d'au moins un des deux trayons avant, **caractérisé en ce que** le champ de détection est produit dans au moins deux positions en déplaçant les capteurs perpendiculairement à la direction longitudinale de l'animal par rapport aux trayons avant pour déterminer la position d'un trayon avant.

4. Procédé pour la traite d'animaux en déplaçant des gobelets trayeurs (6, 7) avec un moyen de positionnement (11 à 13) à partir de l'avant de l'animal à traire vers le pis, les positionnant sous un trayon du pis et les attachant au trayon, après quoi la traite est démarrée, de sorte que pendant l'attachement, le moyen de positionnement est commandé par un système de commande et de sorte que le système de commande est muni d'informations concernant la position des trayons par un système de capteur relié au moyen de positionnement avec un champ de détection (D) produit par au moins un capteur (16) dans un plan sensiblement horizontal derrière les capteurs et qui peut déterminer la position d'au moins un des deux trayons avant et de sorte que pendant l'attachement, le gobelet trayeur a une position fixe par rapport au moyen de positionnement, **caractérisé en ce que** pendant l'attachement, le champ de détection (D) est déplacé en déplaçant les capteurs perpendiculairement à la direction longitudinale de l'animal par rapport au moyen de positionnement pour conserver l'un des deux trayons avant dans la partie la plus sensible du champ de détection.
